# EUROPEAN PATENT APPLICATION

(11) **EP 2 410 465 A1**
(43) Date of publication of application: **25.01.2012**
(21) Application number: 10170354.4
(22) Date of filing: 21.07.2010
(51) Int. Cl.: G06K 9/22, G06K 9/32

(54) **Camera based method for mobile communication devices for text detection, recognition and further processing**

(71) Applicant: beyo GmbH, 14467 Potsdam (DE)
(72) Inventor: Göktekin, Cüneyt, 14467, Postdam (DE)
(74) Representative: Farago, Peter Andreas

(57) **Abstract**

Camera based method for a communication device and in particular for a mobile communication device (1) with an integrated or thereto connected camera module (4), the camera module (4) being operable in a low resolution mode for providing images (3) with a first resolution and in a high resolution mode for providing images (3b) with a second resolution, the second resolution being at least the one-and-the-half of the first resolution, the method comprising the following steps for a detection and a recognition of a text within a text page (10):
a) directing the camera module (4) towards the text of the text page (10) while operating the camera module (4) in a video mode with the low resolution to obtain images (3) with the first resolution and continuously displaying the images (3) in the display (2) of the mobile communication device (1);
b) realtime detection of a substantial alignment (20) of the text and of distortions and of margins of text blocks (11-16) within the images (3) with the first resolution and determination of a position and direction deviation of the camera module (4) from an optimal position and direction in regards to the text;
c) providing acoustical and/or tactile feedback to the user in accordance to the determined position and direction deviation;
d) capturing an image (3b) with the second resolution in the high resolution mode and displaying it in the display (2);
e) detection of text blocks (11-16) within the captured image (3b) with the second resolution according to an image structure analysis and indicating them by frames or the like in the display (2);
f) digital image filtering of the captured image (3b) with the second resolution within the text blocks (11-16) to obtain artifact reduced text block image data and an artifact reduced image therewith;
g) indicating a further data processing status of the text blocks (11-16; 31-36) in the display (2) by a frame and/or a background color or the like;
h) executing the optical character recognition (OCR) on a selected artifact reduced text block within the artifact reduced image to obtain character text blocks (31-36);
i) using the character text blocks (31-36) for an application function.

## Description

### Field of the Invention

The present invention relates to a very efficient method for camera based electronic devices, preferably for mobile communication devices with integrated camera module, to detect within video images in a low resolution mode a horizontal alignment of text within a text page, its distortion and gives so a feedback for an assistive guiding where the user shall move the camera module to. The method further provides the possibility of automatically capturing then an image close to an optimal position and further efficient image processing to obtain character text and translated text in the display of the camera based electronic device.

In particular the method is very useful for camera based electronic translator devices which are used to translate whole text pages, text blocks or parts thereof without a need for a manually typing in the desired to be translated text via a keypad or the like.

### Background of the Invention

Mobile communication devices with integrated camera module show up a good market penetration and use in daily life far beyond a simple phone application. The integrated camera modules in current mobile communication devices get even more powerful and offer already resolutions up over 5 Megapixels, providing optical zoom functionality. An integration of even two camera sensor modules for 3D images is in discussion and seems to be foreseeable.

Electronic translator devices however are up to now all working with a manual input of a text which is desired to be translated either via a physical keypad or via a touch screen keypad.

However there exist camera based electronic text recognition devices with an integrated camera module as disclosed in the European patent application EP 10161624 from the same inventor. Said patent application discloses a camera based method for text input and keyword detection, wherein text of a captured image gets analyzed to find out a most probable keyword therein in order to ease the input of text into a mobile communication device for further applications, as for instance for internet or for text translation applications.

EP 08 169 713 discloses a method and a portable device as preferably a mobile communication device for providing camera based services including the internet, capturing an image of a text page and processing the image data such that text is recognized via OCR software for a further usage within an application.

The European patent application EP 09 17 8778 discloses a camera based method for a mobile communication device with integrated camera module which gives preferably an acoustical and tactile feedback to the user controlling the direction of the camera module and relating to an alignment between the camera module and a text alignment within the image.

WO 2008 114 104 discloses a camera based method for preferably mobile communication devices wherein text within a video frame image gets recognized in quasi realtime, translated into a selected language and preferably overlaid on the original text within the image. So, signs with street names or the like in foreign characters, as Chinese for instance, get in quasi realtime translated and the translations are overlaid on the original letters or on the original text. However, how this can be technically achieved with a reasonable low calculating power is left open.

WO 2007 082 536 discloses a method and a mobile unit with camera and providing an optical pattern recognition, optionally for conversion of imaged text into a comprehensive speech signal. This method discloses as well image filtering for a compensation of blurred and distorted images including a text comparison table in order to achieve a better quality of OCR converted text outputs.

Current Translator devices, as for instance "Sprachcomputer Franklin" from Pons, "Dialogue" or "Professional Translator XT" from Hexaglot or "Pacifica" from Lingo Corporation, as examples, use all a keypad for the input of words or sentences which shall be translated. The translated words or sentences are then displayed on the translator device and/or converted via Text-to-Speech software and output via a loudspeaker.

The application software "Babelshot" from Codium Labs LLC provides for the "iPone" from Apple a photo translator software, so that the iPhone can be simply directed on to a word text, an image is taken and converted via OCR software, then the text gets translated and then displayed on the iPhone device or output via loudspeaker. This can be seen as a helpful tool respectively software for the mobile communication device which is carried by the user anyway; but there is still desirable an easier and assisted directing of the camera module towards the text page which shall be stored or translated. The system is up to now relatively slow and a quicker selection of the text part which is of interest to be translated would be desirable. Especially it shall be mentioned that if the image of the text page is not captured coplanar and parallel aligned to it, an optical distortion and a rotational misalignment lead to significant worse text recognition by afterwards applied OCR software. The same applies for not on the text of the text page centered images which results in a lower resolution for the contained text, leading to a lower quality of OCR converted text.

As camera modules in mobile communication devices become more powerful with an increasing resolution, the necessary calculating power for the image filtering and analysis is as well rising more than quadratic in relation to the image resolution. To achieve a satisfying and usable OCR conversion quality with camera based mobile communication devices a limited calculating power and battery must be taken into account and certain ways have to be found to compensate that reducing calculations as much as possible, still responding quickly to the user and even faster as currently. An intuitive user friendly guiding for a camera positioning, an information/text display and further selections of text parts therein with quick feedback and program execution is desirable.

For a further better understanding it shall be mentioned that the term "text page" always stands also for loose paper pages, book pages, signs, labels, stickers, tags, pictures and all with text inside or upon, text with pictures, display screens and the like.

As well the term "text part" always stands also for a part of text within the text page, comprising either a part of a text block, a text block or some text blocks.

As well the term "mobile communication device" always stands also for all kinds of electronic devices with a integrated or attachable display, comprising an integrated processor, an integrated or an attachable camera module, preferably comprising a wireless and/or wired communication module as WLAN, WIFI, GSM, UMTS, CDMA or the like.

As well the term "first resolution" always stands also for a low resolution of images which were captured in "low resolution mode" of the camera module and/or the processor, wherein captured images with first resolution comprise an amount of image data which is about half or less of an amount of image data of images with "second resolution" captured in "high resolution mode" which is sometimes in literature also known as "snapshot mode". The low resolution mode could stand here also for a so called viewfinder mode, which generates also images with a lower resolution than generally possible.

As well the term "button" and "keypad" always stands also for a physical button/s on the mobile communication device and/or for a touch screen button/s or the like.

As well the term "optimal position" stands for a position of the camera module in regards to the text page wherein the desired text on the text page gets optically detected by the camera module with a substantially horizontal alignment of the text within the image, with least horizontal and vertical distortion and with best resolution of the text within the image (near enough) and wherein the text is sharp pictured.

### Summary of the invention

The objective of the invention is to overcome the shortcomings explained above and to provide a method for detecting an optimal position and direction of a camera module in regards to text on a text page, for guiding the user towards the optimal position and direction and for capturing an image of the said text, wherein this process shall lead to satisfying results for a following optical character recognition (OCR) conversion, shall be fast, intuitive for the user and calculating power efficient.

Another objective of the invention is a method for camera based mobile communication devices for detecting the text and text blocks within the image of the text of the text page and for selection of a text part thereof for a following (OCR) processing, again wherein this process shall lead to satisfying results for a following optical character recognition (OCR) conversion, shall be fast, intuitive for the user and calculating power efficient.

The above objectives as well as further objectives which will become apparent from the following description are achieved by the features described in the independent claims and by additional features and characteristics described in the independent claims.

As apparent from the foregoing, the present invention provides a camera based method for mobile communication devices for detection of a text within a text page, capturing an image thereof, optical character recognition (OCR) and further processing, wherein the processing is designed to be fast, calculating power efficient and providing still satisfying or rather improved OCR results.

In order to safe calculating power on the way from starting the process of capturing the image of the desired text up to obtaining OCR results of the text, a main idea is to shift some effort to the user who is directing the camera module towards the text and preferably letting him also select a text block or text of the text page in which he is interested first, second, third and while he is reading the first part, the second and third part can be processed.

A first step to save calculating power and calculating time is to try to obtain a captured image of the text with an optimal quality and therewith reducing a following filtering calculation effort. To obtain the captured image of the text with an optimal quality the user moving/directing the camera module towards the text is guided to move the camera module close enough to an optimal position and direction. The optimal position and direction of the camera module in regards to the text implies preferably that the text within the image has lowest distortion, is aligned with the image frame, is sharp focused and that the desired text fills the image close to its margins in order to achieve best resolution. Additionally the first step is preferably processed in a low resolution mode wherein the size of video image data is chosen according to the possibilities of the camera module and to obtain enough information for detecting the text on the text page in regards to its alignment, its horizontal and vertical distortion, its sharpness (focused) and filling out the image.

The guiding of the user shall be done preferably with an intuitive feedback acoustically and/or tactile. After the position and direction of the camera module is close to the optimal position and direction, there is preferably automatically captured an image in a high resolution mode or snapshot mode, respectively, with a second resolution which is preferably the highest resolution of the camera module in order to achieve most information of the text and get thereof best OCR results.

In a second step the captured image with second resolution gets preferably analyzed for text blocks and text parts, indicating them in the display and making them selectable for a following OCR processing. Doing so, the calculation effort in the second step is reduced to a detection of text lines and text blocks and their indication in the display. The user may then preferably select a sequence of text blocks to be processed according to the application which can be an OCR processing and displaying the character text in the display or it can comprise furthermore a translation and displaying the translated character text or the like.

In the second step the necessary calculation power is reduced so far, that a digital image filtering to improve the image for the following OCR conversion is preferably reduced to the text blocks and not outside of them and that the OCR processing time and possibly the translation time is preferably also reduced to the first selected text block leading to a fast display of the results. While the user reads first processed text block results the next text blocks get processed in a background and are made immediately accessible.

The result over all for translation applications is preferably an easier and guided positioning of the camera module over the desired text on the text page, the power saving by selecting the low resolution mode until the image with high resolution is captured for text recognition purposes, the power saving by less image filtering effort due to an already good quality of the captured high resolution image and due to image filtering in text blocks and a faster results of desired translated text due to the selection of the respective text block which gets then OCR processed and translated first.

Further advantageous aspects of the invention are set out in the following detailed description.

The invention is set forth and characterized in the main claims, while dependant claims describe other characteristics of the invention.

One solution of a preferred embodiment according the present invention is disclosed in the following drawings with detailed description but it shall not be limiting the invention.

### Brief description of the drawings

- Fig. 1: is a drawing of a mobile communication device with integrated camera module which is directed onto a text of a text page, showing also an image area of the camera module.
- Fig. 2: is a drawing of an image with a first resolution of the text page shown in the display of the mobile communication device being rotary misaligned in regards to the text and showing an overlaying arrow indicating a movement direction of the mobile communication device which is rotatatably horizontally anti-clockwise.
- Fig. 3: is a drawing of the image with first resolution of the text page shown in the display of the mobile communication device, indicating a distortion of the text along a vertical axis and showing an overlaying arrow indicating a movement direction of the mobile communication device.
- Fig. 4: is a drawing of an image with a second resolution of the text page being close to an optimal position in regards to the text shown in the display of the mobile communication device.
- Fig. 5: is a drawing of the image with second resolution of the text page as in Fig. 4 additionally showing in the display of the mobile communication device the processing status with changed background color.
- Fig. 6: is a drawing of a displayed image comprising OCR converted character text of the full resolution image of Fig. 5 or a translated text thereof.
- Fig. 7: is a drawing of the displayed image with character text or translated character text and arrow signs for accessible next parts to be displayed.
- Fig. 8: is a drawing of the text page with the mobile communication device in a first position directly touching the text page and the mobile communication device which got then moved to a second position away from the text page but parallel thereto.

### Detailed description of the Invention

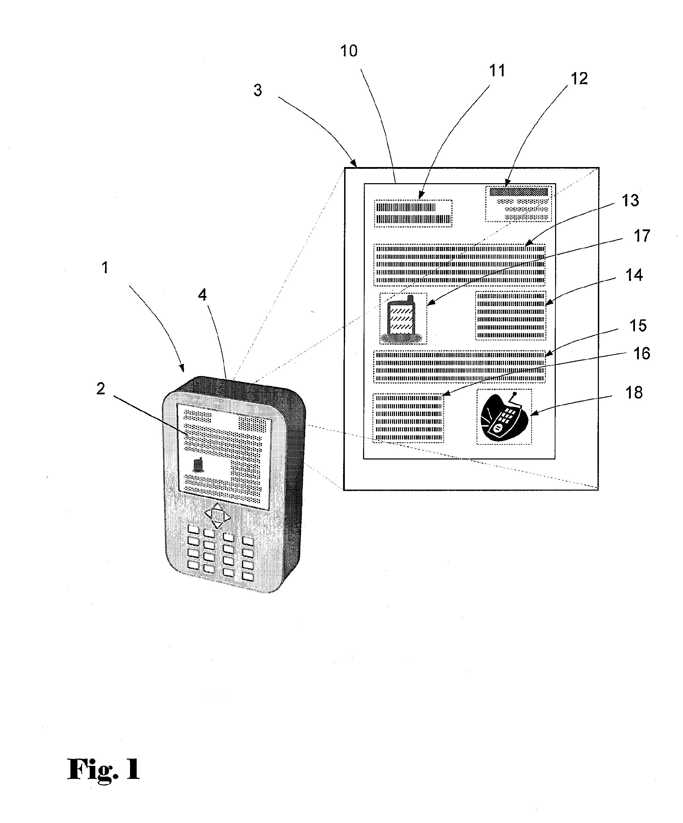

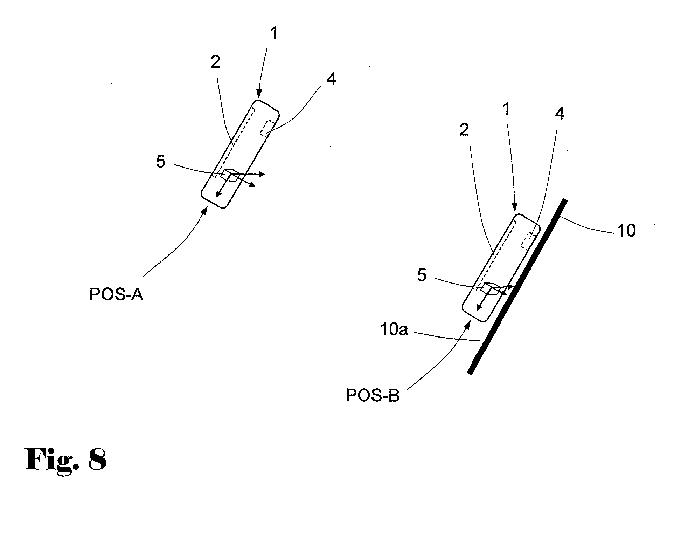

Fig. 1 shows a mobile communication device 1 with a display 2 and an integrated camera module 4 (on a back side - see also Fig. 8) being directed towards a text page 10 and having a viewing area of the camera module 4 leading to an image 3 thereof with a first resolution. The text page 10 contains in this example multiple text blocks 11-16 and two pictures 17, 18 therein.

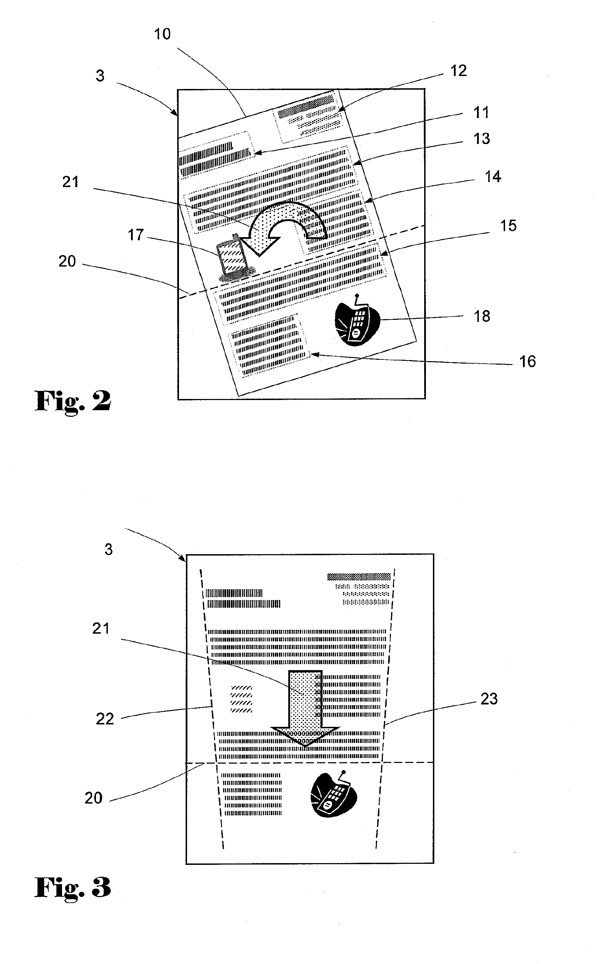

The mobile communication device 1 and the camera module 4 is set first into a low resolution mode, having a relatively low first resolution, wherein the image 3 of the camera module 4 is captured with a repetitive video frame rate and is sent to a processor of the mobile communication device 1. The selected first resolution is preferably about 640x480 pixel and preferably with a low color resolution or with grayscale resolution, implicitly delivering and/or processing only so much data which is necessary for text alignment (20) and distortion detection and to determine the focus of a lens. Preferably a pixel resolution of the image 3 with first resolution is about half or less than an image 3b with second resolution of a high resolution mode or snapshot mode, respectively. Preferably the resolution of the image data in first resolution can be even more reduced by delivering or processing only grey scale values with a low grey scale resolution. The current image 3 with first resolution as also all the following images 3 with first resolution within the video image sequence get filtered and analyzed such as to detect therein the substantial alignment 20 of the text (Fig. 2) and/or a horizontal and/or a vertical trapezoidal distortion of the text, and preferably to control a focus of a lens. A misalignment and distortions or the like would later decrease the quality of a later OCR processing from such a camera position. As well there are detected vertical and horizontal margins of the text and of the text blocks 11-16 for finding out whether the captured text is centered within the image or whether there is a part of the text cut-off.

After the detection of the alignment 20 of the text, the horizontal and vertical trapezoidal distortions of said margins of the text blocks 11-16 and preferably of the centers of the text blocks 11-16 there is preferably calculated a correction movement of the position and direction of the camera module 4 such that the distortions and possible text cuts are brought to a minimum. The calculated correction movement can also be expressed as position and direction deviation, being the difference between the current and the calculated optimal position.

The filtering as preprocessing to the above detection processing comprises preferably shadow compensation and binarization. The detection of the alignment 20 of the text is preferably based on a statistical analysis of horizontal and vertical pixel sums giving an indication of text lines, their height and distances thereof.

It shall be mentioned that the determination of the position and direction deviation is preferably done by intelligent algorithms, which are for instance able to neglect detected cut-off text parts which do not become corrected by the user within a specified time and so concluding that this cut-off is desired. Furthermore if the camera module 4 is for instance after a short movement kept significantly on a certain part of the text page, this can preferably be detected as not significantly moving text blocks, concluding that the user wants to stop the positioning process and to take the text displayed in the display 2. After the optimal or desired position and direction of the camera module 4 is detected, the processor preferably switches the camera module 4 to the high resolution mode with the high second resolution and the image 3b with SR is captured and used for following processing steps.

Fig. 2 shows the image 3 with first resolution of the text page 10 which is in that case not yet aligned with the horizontal line of the camera module 4. The substantial alignment 20 of the text within the text page 10 is detected, wherein the pictures 17 and 18 are preferably not taken into account. Preferably the detected alignment 20 is displayed within the display 2 as a line, a cross, a parallel rectangle frame or the like. For the user of the mobile communication device 1 there is shown in the display 2 preferably an overlaid arrow 21 indicating the movement direction of the mobile communication device 1 into the optimal position and direction by moving/rotating it in direction of the arrow 21.

Fig. 3 shows the image 3 with first resolution of the text page 10, wherein the vertical left and right alignments 22 and 23 of the text therein is not parallel what implicates a distortion of the text within the image 3 with first resolution, because the camera module 4 is not coplanar held in regards to the text page 10. So as before mentioned, a position correction of the camera module 4 is calculated and indicated as an overlaid arrow 21 in the display 2 of the mobile communication device 1, indicating for the user in which direction he has to move the camera module 4.

Preferably after determination of the position and direction deviation of the camera module 4 in regards to the text page 10 and the calculation into which direction the camera module 4 has to be moved towards the optimal position and direction, there is preferably provided to the user an acoustical and/or tactile feedback by a loudspeaker and/or a vibration actuator. This immediate feedback gives the user a quick maneuverability of the camera module 4 into an improved direction and position. Possible acoustical and tactile feedback signals of that kind are for instance also described in EP 10161624.1 of the same inventor. Additionally it is also imaginable to display with corrective movement directions also its length values in scales of cm or the like.

As mentioned before, after the optimal or desired position and direction of the camera module 4 is detected, the processor preferably switches the camera module 4 and his own further processing to the high resolution mode obtaining the image 3b with second resolution, which is then instantly captured and further used for the following processing steps. The capturing of said image 3b with second resolution is preferably executed automatically but also with an option for a manual control by a button press or the like.

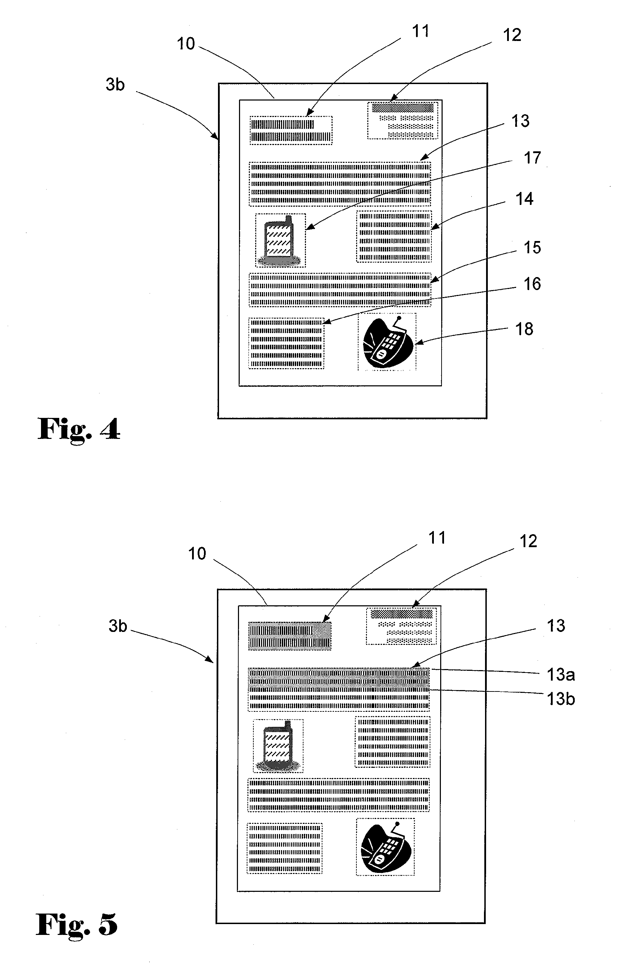

Fig. 4 shows the image 3b with second resolution which is supposed to cover the same text as the image 3 with first resolution from a little time delay before. Under the assumption that the viewing area of the camera module 4 was during a short time delay between the switch-over from the low to the high resolution mode and the captured image 3b with second resolution not moved to fast and too far away from the previous image 3 with first resolution, the difference between the frames of the image 3 with first resolution and image 3b with second resolution should be insignificant.

It shall be mentioned that according to the present invention the data processing during the positioning process of the camera module 4 in regards to the text page 10 is done in the low resolution mode processing images 3 with first resolution and therewith needs much less calculating power, leads to a faster response time and is saving battery power.

Fig. 4 shows the image 3b with second resolution with the optimal position of the camera module 4 in regards to the text page 10. The text blocks 11-16 within the text page 10 are detected and preferably indicated by dotted lines or frames. Pictures 17 and 18 within image 3b with second resolution are preferably not further processed but they still can be shown in the display 2 for overview purposes or they can be neglected. After the detection of the text blocks 11-16 a digital image filtering is processed preferably only within the text blocks 11-16 in order to save calculating power.

The digital image filtering of the image 3b with second resolution comprises preferably shadow compensation, rotation of the image as far as still necessary, unwarping, binarization and the like and provides thereof an artifact reduced image comprising preferably artifact reduced text blocks 11-16.

After the artifact reduced image is obtained, the OCR processing is executed (Fig. 5) on the first available text block 11 obtaining character text. After the OCR processing on the text block 11 is done, the OCR processing starts preferably with a next text block 13 the same way, continuing with the OCR processing preferably up to the last text block 16. During the OCR processing the processing status where the current conversion processing stands is preferably indicated in the display 2 as color frame, changing a background color or the like. In the example of Fig. 4 the text block 11 and the text block 13 starting from a first upper end 13a to a second lower end 13c thereof changed to another background color indicating that these text parts are already OCR converted.

Preferably after the text blocks 11-16 get displayed for a selection, the user selects any text block 11-16 in which he is interested to be processed first and to see results of a translation thereof, whereupon the OCR processing immediately starts at that point followed by a translation. This reduces the response time to what the user really wants to see and have as a result.

Another preferred method comprises the possibility to select and store a sequence of multiple text blocks 11-16 for the further processing comprising OCR and translation for instance.

Another preferred method comprises the possibility to determine the sequence for an OCR processing of multiple text blocks 11-16 or in word translation mode for words therein by a semantically analysis. This comprises preferably the detection of bold/normal and/or big/small letters and/or a fitting of the text blocks 11-16 and pictures 17, 18 to a stored template with text blocks 11-16, wherein text blocks 11-16 are defined with a higher and a lower priority.

If any text block 11-16 gets selected by the user for instance via keypad or touch screen input or the like, there is preferably executed the OCR immediately from that text block 11-16 on if this was not yet executed and the obtained respective character text thereof is then used then for an application as preferably for a translation application.

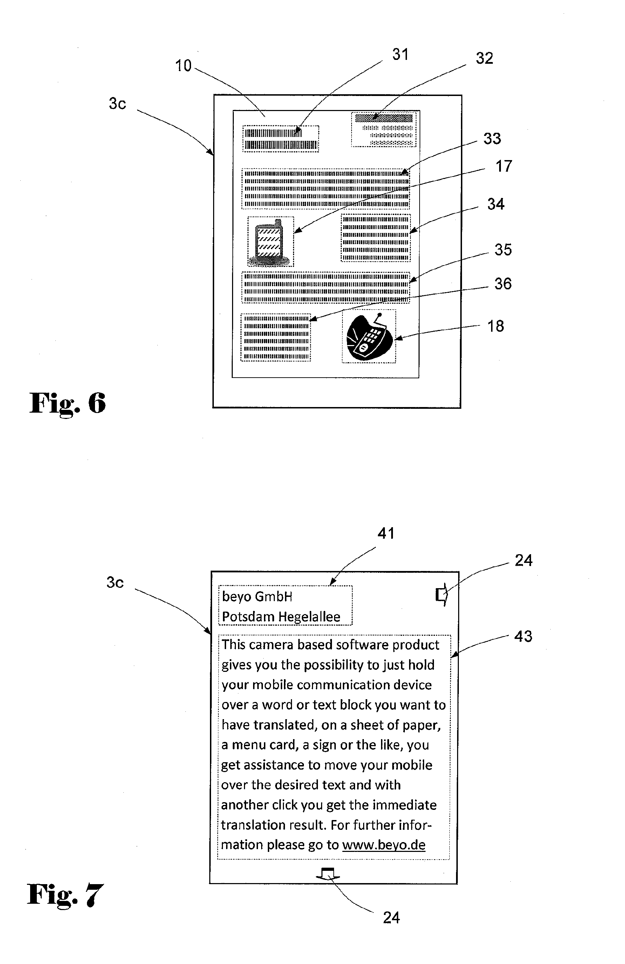

Fig. 6 shows a displayed image 3c comprising the character text of the foregoing OCR conversions within character text blocks 31-36, either containing the OCR converted character text or translated character text in case of a translation application. In the preferred case of the translation application there can be preferably selected whether the original OCR converted character text or the translated character text shall be shown. In the preferred translation application it is selectable whether a word translation or a text (block) translation of one or more text blocks 11-16 shall be executed. Preferably the pictures 17 and 18 are also displayed for a better overview.

In case of the word translation the user can preferably select a displayed word, which gets then either translated or is taken from an already existing translation, whereupon the translation results get preferably shown in a table like manner.

In case of a text block translation the user can preferably select a text block 31-36 to be shown as translation, which gets either then translated or it is taken from an already processed translation, whereupon the translation result gets preferably shown in the display 2 as shown in Fig. 6 giving still the impression of the original text page or as in Fig. 7, having a very simple word text design.

Fig. 7 shows another preferred option of displaying character text or translated character text or data connected thereto in a very simple word text manner, shown in blocks 41 and 43. Preferably arrow signs 24 indicate a possibility to show to neighboring blocks with the respective buttons.

Fig. 8 shows a preferred method, wherein the mobile communication device 1 with camera module 4, display 2 and an acceleration sensor 5 with three sensitivity axes is at the beginning of the positioning process shortly held/put on the text page 10 which shall be detected. The mobile communication device 1 is shown in a first position POS-A on top and parallel to the text page 10 and in a second position away from the text page 10 but still parallel thereto. While the mobile communication device 1 (with camera module 4) is shortly held on top and parallel to the text page 10 in the first position POS-A, this gets preferably detected either by the camera module 4 and/or by the acceleration sensor 5, and so a relative position and 3D direction (by gravitation) gets detected and stored as first position POS-A. All following movements of the camera module 4 away from the text page 10 in order to capture an image 3 of the text page 10 is can be calculated/determined by analysis of the acceleration sensor signals. The obtained acceleration sensor signals and the analysis thereof help to determine a deviation from a coplanar direction of the mobile communication device 1 in relation to POS-A.

Another preferred method to detect a movement of the camera module 4 takes also other sensor signals into account, as a gyro sensor and/or a distance sensor and/or a magnetic field sensor for the magnetic earth field and the like.

Another preferred method to detect the movement and/or the distance of the camera module 4 in regards to the text page 10 and certain text blocks 11-16 therein takes a camera module 4 comprising two or more CCD sensors into account. So the distance gets measurable for movement assistance for the user respectively for the determination of the position and direction deviation of the camera module 4. Another preferred application for a dual or multiple CCD sensor signal camera 4 is the determination of the distance within a focus point which has to be directed then onto the desired text block 11-16, so that the camera module 4 controls its focus on that.

Another preferred method, wherein the mobile communication device 1 comprises an acceleration sensor 5 and/or a gyro sensor comprises a distance calculation from one position AA to another position BB nearby of the camera module 4, capturing in position AA and in position BB each an image 3b with second resolution, so that a quasi 3D picture can be calculated. After determination of the distance between the text and the camera module 4 there are preferably used for the further detection of the text blocks 11-16 and an OCR processing, respectively, only these parts of the image 3b with second resolution that have the same distance as a text in the focus of the detection algorithm; all other background noise or the like is not taken into account for the detection of the text blocks 11-16. Preferably the user gets also directed in his movements from position AA to position BB by tactile, acoustical or visual feedback instructions.

It shall be mentioned that during the detection of the text alignment 20 in regards to the camera module 4 respectively within the image 3 with first resolution, the processor can switch preferably automatically or semi-automatically from upright mode to landscape mode and vice-versa, whatever fits better to the text alignment 20.

The current invention shall not be limited to the amount of in the figures shown text blocks 11-16 and/or displayed pictures 17,18 and/or displayed text 41,43, as these are only examples.

Furthermore, although the present invention has been described in connection with certain specific embodiments and processing sequences for instructional purposes, the present invention is not limited thereto. Accordingly various modifications, adaptations and combinations of various features of the described method and embodiment can be practiced without departing from the scope of the present invention as set forth in the accompanying claims.

Where technical features mentioned in any claim are followed by reference signs, those reference signs have been included just for the sole purpose of increasing intelligibility of the claims and accordingly, such reference signs do not have any limiting effect on the scope of each element identified by way of example by such reference signs.

### List of Reference Numerals

- 1: Mobile communication device
- 2: Display
- 3: Image with first low resolution
- 3b: Image with second high resolution
- 3c: Displayed image
- 4: Camera module
- 5: Acceleration sensor
- 10: Text page
- 10a: Surface of the text page
- 11-16: Text block
- 13a: first upper end (of the text block 13)
- 13c: second lower end (of the text block 13)
- 17-18: Picture (no text)
- 20: Horizontal alignment of the text
- 21: Arrow (for movement direction of the camera module)
- 22: Vertical alignment of the text on the left side
- 23: Vertical alignment of the text on the right side
- 24: Arrow signs
- 31-36: Character text blocks
- 41, 43: blocks
- POS-A: First position
- POS-B: Second position

## Claims

1. Camera based method for a communication device and in particular for a mobile communication device (1) with an integrated or thereto connected camera module (4), the camera module (4) being operable in a low resolution mode for providing images (3) with a first resolution and in a high resolution mode for providing images (3b) with a second resolution, the second resolution being at least the one-and-the-half of the first resolution, the method comprising the following steps for a detection and a recognition of a text within a text page (10):
a) directing the camera module (4) towards the text of the text page (10) while operating the camera module (4) in a video mode with the low resolution to obtain images (3) with the first resolution and continuously displaying the images (3) in the display (2) of the mobile communication device (1);
b) realtime detection of a substantial alignment (20) of the text and of distortions and of margins of text blocks (11-16) within the images (3) with the first resolution and determination of a position and direction deviation of the camera module (4) from an optimal position and direction in regards to the text;
c) providing acoustical and/or tactile feedback to the user in accordance to the determined position and direction deviation;
d) capturing an image (3b) with the second resolution in the high resolution mode and displaying it in the display (2);
e) detection of text blocks (11-16) within the captured image (3b) with the second resolution according to an image structure analysis and indicating them by frames or the like in the display (2);
f) digital image filtering of the captured image (3b) with the second resolution within the text blocks (11-16) to obtain artifact reduced text block image data and an artifact reduced image therewith;
g) indicating a further data processing status of the text blocks (11-16; 31-36) in the display (2) by a frame and/or a background color or the like;
h) executing the optical character recognition (OCR) on a selected artifact reduced text block within the artifact reduced image to obtain character text blocks (31-36);
i) using the character text blocks (31-36) for an application function.

2. Camera based method according to claim 1, wherein step i) further includes that the application function is a translation application obtaining translated text from the character text block (31-36) and/or wherein it can be selected whether the whole character text block (31-36) or a part or word thereof gets translated and displayed.

3. Camera based method according to claim 1 or 2, wherein step b) further includes for the determination of the optimal position and direction of the camera module (4) at least one additional sensor signal from an acceleration sensor (5) and/or a gyro-sensor and/or a magnetic field sensor and/or a distance sensor based on ultrasound, laser, two or more camera modules (4) or the like.

4. Camera based method according to claim 3, wherein step c) further includes an additional visual feedback to the user by at least one arrow (21) on the display (2) indicating in which direction the mobile communication device (1) has to be moved to.

5. Camera based method according to the preceding claims, wherein step d) includes capturing the image (3b) with second resolution at a first position AA and capturing a second image with second resolution a second position BB, whereupon a 3D picture is calculated and wherein only the parts of the image (3b) with second resolution are used for the further processing which have the same distance to the camera module (4) as the text in the focus of the camera module (4),
wherein this is achieved by two separate camera modules (4) or by two CCD chips integrated in the mobile communication device (1) or by a movement of the mobile communication device from position AA to BB and measurement thereof by the acceleration sensor (5), a physical template or the like.

6. Camera based method according to the preceding claims, wherein step d) further includes a detection of the desired or optimal position of the camera module (4) whereupon the capturing of the image (3b) with second resolution is executed automatically or is controlled manually by a button press.

7. Camera based method according to the preceding claims, wherein step b) further includes for the determination of the position and direction deviation a detection of a center of the text or of the text page (10).

8. Camera based method according to the preceding claims, wherein step f) further includes contrast enhancement and/or shadow compensation and/or unwarping and/or a rotational correction leading to the substantially horizontal alignment (20) of the text.

9. Camera based method according to the preceding claims, wherein step f) and or g) further includes the detection of user input commands for a selection in regards to a starting point for a processing of one or more of the text blocks (11-16) to be OCR converted and further processed by the application as for instance a translation.

10. Camera based method according to the preceding claims, wherein step g) further includes the indication of the status of the OCR processing within the text blocks (11-16) and/or the status of the further processing of the application.

11. Camera based method according to the previous claims, wherein step i) further includes that the further processed data as for instance translated character text gets displayed as a replacement text within a same frame of the character text block (31-36).

12. Camera based method according to claim 12, wherein step i) further includes a selection possibility whether the character text or the translated or back-translated character text or a word or a back-translated word gets displayed.

13. Camera based method according to the preceding claims, wherein step a) to i) gets processed by equal or less than three interactive button presses in order to get the result of the application which is preferably a translation application.

14. Camera based method according to the preceding claims, wherein step e) includes the detection and displaying of multiple text pages within the full resolution image (3b), whereupon one of them is selectable for the further processing according steps e) to i).

15. Camera based electronic device comprising a functionality and method as described in the preceding claims.
